**Europäisches Patentamt**

(19) **European Patent Office**

**Office européen des brevets**

(11) Publication number : **0 203 950 B2**

(12) # NEW EUROPEAN PATENT SPECIFICATION

(45) Date of publication of the new patent specification : **09.12.92 Bulletin 92/50**

(51) Int. Cl.⁵ : **F16K 11/074**

(21) Application number : **85905823.2**

(22) Date of filing : **03.12.85**

(86) International application number :
**PCT/EP85/00658**

(87) International publication number :
**WO 86/03569 19.06.86 Gazette 86/13**

(54) **A SINGLE HANDLE MIXING VALVE WITH CARTRIDGE, HAVING AN INLET REVERSING MEMBER.**

(30) Priority : **11.12.84 IT 6823284**

(43) Date of publication of application :
**10.12.86 Bulletin 86/50**

(45) Publication of the grant of the patent :
**24.01.90 Bulletin 90/04**

(45) Mention of the opposition decision :
**09.12.92 Bulletin 92/50**

(84) Designated Contracting States :
**CH DE FR GB LI**

(56) References cited :
**EP-A- 0 119 960
DE-A- 2 364 913
DE-A- 2 928 330
DE-A- 3 211 619
DE-A- 3 239 924
FR-A- 2 530 311**

(56) References cited :
**US-A- 424 063
US-A- 3 674 048
US-A- 4 022 242
US-A- 4 243 063
US-A- 4 362 186
US-A- 4 378 029
US-A- 4 478 249**

(73) Proprietor : **GEVIPI A.G.
Aeulestrasse 5 Postfach 83 Triesen
FL-9490 Vaduz (LI)**

(72) Inventor : **GRASSBERGER, Roland
Place Stéphanie 10 bte 5
B-1050 Bruxelles (BE)**
Inventor : **KNAPP, Alfons
Bleicherstrasse 3
W-7950 Biberach/Riss (DE)**

(74) Representative : **Patrito, Pier Franco, Dr. Ing.
Cabinet PATRITO BREVETTI Via Don Minzoni
14
I-10121 Torino (IT)**

**EP 0 203 950 B2**

## Description

Technical field

This invention relates to a single handle mixing valve as defined in the preamble of Claim 1 and known from FR-A-2530311.

Background of the invention

In view of avoiding operation errors by the users, it is commonly required that in all single handle mixing valves a shifting of the lever handle to the right provides for delivery of colder water whilst a shifting to the left provides for delivery of hotter water. This involves that in a certain valve the inlets cannot be exchanged between them, i.e. that the hot water pipe cannot be connected to the inlet intended for cold water and vice versa, since this would result in an undesired reversal in the operation of the valve. Therefore, in installing a plant, the supply pipes inserted in the walls, to which the valves will be connected, should be suitably disposed. However, certain difficulties arise in specific situations. For example, it is very convenient to have two valves in two different rooms placed on the opposite sides of a common wall and connected to common supply pipes. Unfortunately the pipe that is on the right for a first valve turns out to be on the left for the other valve. So, unless one accepts the fact that each valve operates in an opposite fashion from the other, it is necessary to have two valves with two different operating mechanisms therein that provide for reverse arrangement of the supply pipes. This factor causes higher cost and the risk of installing the wrong valve, which would require later replacement.

According to EP-A-0 119 960 there is provided an additional member which is intended to be connected to the supply pipes and to receive the mixer valve mounted therein in any angular position. A system of water passages is provided in the additional member and the mixer valve in order that the water supplied to each inlet connection of the additional member is always led to a corresponding passage of the mixer valve, irrespective of the position of this latter relative to the additional member. Therefore, by connecting the additional member in one position or in the opposite one with respect to the supply pipes, it is possible to reverse the connection of the mixer valve to the pipes. However, this selection should be made at the moment of connecting the additional member and can in no way be corrected later on if the wrong position has been selected, except for dismounting from the pipes the additional member and re-mounting the same in the opposite position. A wrong selection of the connection position is extremely likely, due to the fact that the pipes for hot and for cold water are identical to one another and can in no way be distinguished at the time of installing the additional member. Moreover, the need for a complicated additional member for each mixer valve highly increases the cost of the installation.

According to US-A-4,022,242, the reverse mounting of a disc valve plate within the valving mechanism allows reversing the relationship between inlet connections and hot, respectively cold, water. However, such an arrangement only allows control of the mixing ratio between hot and cold water, and not a control of the water flow when mixed water is delivered, whereby it could be applied for showers, as stated in the document, but not for any other hydraulical appliance.

According to US-A-3,674,048, in a valve for showers, only allowing control of the mixing ratio and not of the flow rate, reversing the relationship between inlet connections and hot, respectively cold, water is obtained by differently limiting, in a mechanical way, the stroke allowed to the control member of the valve, which moves in rotation only. Such mechanical means could not be used in valves allowing control both of the mixing ratio and of the flow rate, because their control member should be movable in two different manners, namely in rotation and by a diametrical tilting, and its orientation cannot be freely modified.

According to US-A-4,243,063, always in a valve for showers only allowing control of the mixing ratio and not of the flow rate, reversing the relationship between inlet connections and hot, respectively cold, water is obtained by differently mounting one of the control members of the valve themselves. Such means could not serve for the more complex valves also allowing control of the flow rate, and moreover it could not be used in cartridge valves, where the control members, contained in the cartridge, are in no way accessible for changing their position.

Therefore, in view of the above state of art, there was the problem of allowing reversing the relationship between inlet connections and hot, respectively cold, water, in a valve of more general use than for showers only, suitable for controlling both the mixing ratio and the flow rate, and more particularly in such a valve being a cartridge type, as presently required in most instances.

Disclosure of the invention

The object of this invention is to overcome the stated difficulties by providing a single handle valve of the type stated in the preamble, wherein, preferably by a simple operation effected when installing the valve and which can be corrected at any time in case of mistake, the disposition of the inlets can be established in the one or in the opposite mode, whereby the valve can receive, at choice, cold water from right inlet and hot water from left inlet, or vice versa, though in any event preserving a correct operation.

In accordance with the invention, this object is attained by the features of Claim 1.

According to a possible embodiment, the reversing member may include two separate pieces, the first piece being intended to be installed to achieve the first insertion mode and the second piece being intended to be installed to achieve the second insertion mode, the remaining piece of the reversing member being in each case excluded.

Thanks to these characteristics, at the time of installation the valve can be simply connected to the supply pipes regardless of whether the cold or the hot water supply pipe is on the right side, and then the actual position of the hot and cold water supply pipes can be compensated by the correct selection of the insertion mode of the reversing member within the valve body, so that the hot and cold water are in any event directed to the appropriate cartridge entrances or other valve portions, irrespective of the hot and cold water passing through the first or the second inlets within the valve body. Any error possibly made during the installation and successively revealed can, in any event, be easily corrected by displacing the reversing member from the one to the other insertion mode. The systematical use of such a possibility often allows to simplify and rationalize the disposition of the supply pipings, as well as to avoid the manufacture of valves having different dispositions of their inlets.

Brief description of the drawings

These and other features and advantages of the invention will be more clearly apparent from the following description of some preferred embodiments, diagrammatically shown in the appended drawings, in which:

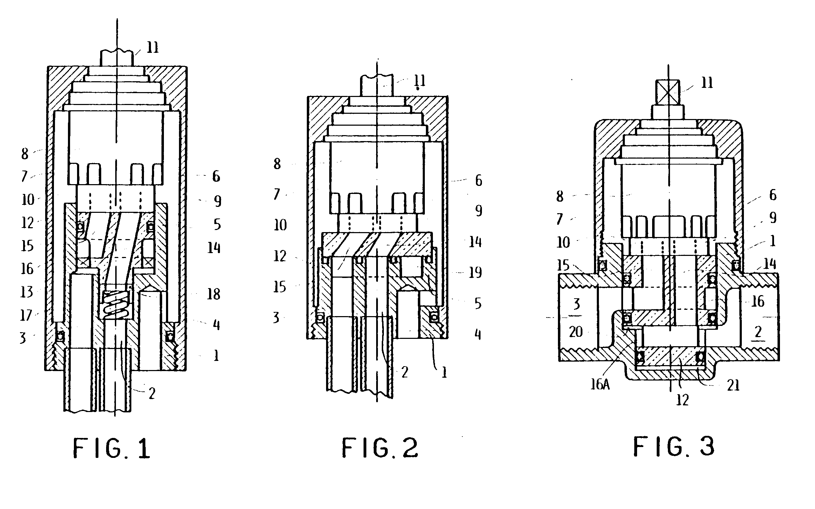

Figures 1 to 4 are side elevational views of the axial sections of five different embodiments of valves according to the invention; and

Best modes for carrying out the invention

Referring now to Figure 1, a single handle mixing valve includes a body 1 having two inlets 2 and 3 for hot and cold water and a discharge outlet 4 for the mixed water, as well as a member 5 in the form of a cylindrical extension which has a central bore; in the embodiment shown, the inlet 2 extends in axial direction. To the body 1 is connected a cap member 6 which together with the body 1 defines a chamber 7, and against which rests a valving cartridge 8 having first and second entrances 9 and 10 for the hot and cold water, respectively. A control lever 11 extends upwardly through the cap member 6 for controlling in a conventional fashion the movements of the valve elements within the cartridge. The cartridge 8 is fitted within the cap chamber 7 such that the entrances 9 and 10 face downwardly into the bore of extension 5;

the cartridge has not been shown in more detail in this figure since it can be of conventional construction, i.e. any usual, well known cartridge for single handle mixer valves.

A reversing member 12 is fitted within the bore of extension 5, wherein it seals by means of a peripheral packing, and it has a centrally protruding downward extension 13 that is sized to fit within the central inlet 2 of body 1, wherein it seals by means of a packing 18 pushed by a spring 17. The reversing member 12 has a first passage 14 which extends from the central extension 13 obliquely towards a position on the opposite face of reversing member 12, which registers with the first entrance 9 of cartridge 8. The reversing member further has a second passage 15 which connects a position on the face of the reversing member, registering with the second entrance 10 of cartridge 8, to a peripheral chamber 16, which in turn is in fluid communication with the second inlet 3 of body 1. The peripheral chamber 16 can alternatively be an annular or semi-annular chamber or even a peripheral groove that extends only partially about the reversing member.

The reversing member 12 can be inserted into the cylindrical extension 5 of body 1 in two different positions; the first is that now described and shown in Figure 1, the second position is rotated by 180° around the valve axis with respect to the first position, and it would therefore appear as symmetrical to the position shown with respect to the valve axis. Suitable stops, not shown in this figure, can be provided for fixing these positions and ensure that the reversing member is correctly inserted in one of said two positions.

In the position shown, the first passage 14 registers with the first entrance 9 of cartridge 8, and the second passage 15 registers with the second entrance 10 of cartridge 8, whereby water entering the first inlet 2 of body 1 is directed to the first cartridge entrance 9, whilst water entering the second inlet 3 of body 1 is directed to the second cartridge entrance 10.

If, on the contrary, the reversing member 12 is displaced to its second position, symmetrical to the first one, passage 14 is made to register with the second cartridge entrance 10 and passage 15 is made to register with the first cartridge entrance 9, whereby water entering the first inlet 2 of body 1 is now directed to the second cartridge entrance 10 and water entering the second body inlet 3 is directed to the first cartridge entrance 9. Therefore the reversing member 12 allows to invert the predisposition of valve inlets with respect to supply pipings.

It is to be noted that the three connections: inlets 2, 3 and outlet 4, of body 1 do not need to be disposed on a same plane, on the contrary inlet 3 and outlet 4 can each be situated in any angular position around the central inlet 2.

In the embodiment described, the reversing member 12 undergoes the thrust of spring 17 and the pressure of water within inlet 3, and therefore it applies to the cartridge a total force resulting from the addition of a constant force and a force proportional to the actual water pressure, thus also effecting the operation of a piston compressing the cartridge, such operation being per se the subject matter of another Patent Application of same Applicant (WO 86/03568).

Figure 2 shows a second embodiment in which the components corresponding to those already described are designed by the same references. Substantially, the difference with respect to the first embodiment is that the peripheral chamber intended to communicate the second passage 15 of reversing member 12 with the second inlet 3 of body 1 is a chamber 19 (annular or partially annular) that is situated within the extension 5 of body 1, rather than a chamber 16 formed within the reversing member 12, and that the packings interposed between the reversing member 12 and the extension 5 are concentrical and, by their own yieldability, also effect the operation of spring 17 of the first embodiment. Such arrangements allow to reduce the general encumbrance of the device, and to simplify the shape of reversing member 12. Also in this case, the reversing member 12 passes from the first to the second insertion mode through a rotation by 180° around the valve axis, and the operation is the same as already described. In this case too, the angular position of connections 3 and 4 around central connection 2 may be whatever.

The embodiment according to Figure 3 is suitable for a different disposition of the supply pipings, and inlets 2 and 3 of body 1 are directed in radial direction, for example (but not necessarily) diametrically opposite the one another, rather than in axial direction as shown in the first two embodiments. The body 1 further includes one or two outlets, not shown, which may be disposed for example at 90° with respect to the inlets 2 and 3. In this case there is no cylindrical extension 5 of body 1, as in the first and second embodiments, and the seat for the reversing member is located within body 1 between inlets 2 and 3. The passages 14 and 15 of the reversing member are both in communication with peripheral chambers, 16A and 16, superimposed the one another and separated by a ring seal, which chambers on their turn are connected to inlets 2 and 3 of body 1. The reversing member 12 passes from its first to the second position through a rotation by 180° around the valve axis, and the operation is the same as already described. The water pressure of inlet 2 acts on reversing member 12 within the chamber 20, whereas a projection of the reversing member 12 is inserted with seal into a blind chamber 21 of body 1 and compresses the air trapped therein, which acts as an elastic member. Therefore, in this embodiment too the reversing member also effects the operation of a piston compressing the cartridge.

As it appears from the foregoing examples, the two insertion modes of the reversing member may be achieved by inserting the one or the other of two pieces forming the reversing member, or by rotating the reversing member around the valve axis, or else by displacing the reversing member upside down.

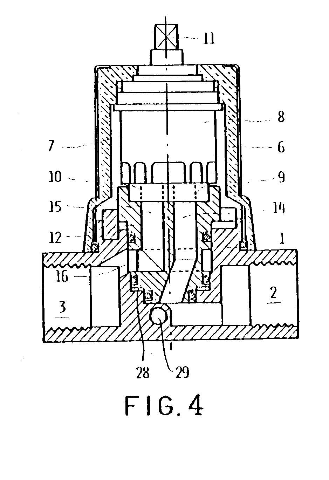

Another embodiment, similar to that of Figure 3, is disclosed in Figure 4, in which the passage 15 of the reversing member still communicates with a peripheral chamber 16 connected on its turn to body inlet 3, whilst passage 14 passes through the reversing member and opens centrally on its bottom face, where it directly communicates with inlet 2. The reversing member 12 still passes from its first to the second insertion mode through a rotation of 180° around the valve axis, and the operation is as already described. Number 29 designates a passage in body 1 which connects the one another two outlets (not shown) disposed at 90° with respect to inlets 2 and 3. The bottom portion of reversing member 12 has a reduced diameter, and undergoes the pressure in inlet 2. Chamber 28, formed where the reversing member 12 is stepped, is blind, and the reversing member compresses the air trapped therein, which operates as an elastic member. Therefore, also in this embodiment the reversing member acts as a piston compressing the cartridge.

In the embodiments according to Figures 3 and 4 the inlet 2 and 3 of body 1 may have any angular orientation, and they may also be situated sideways the one another, converging or even parallel.

The reversing member according to the invention allows, during the design operation, to choose very freely the position of the inlet and outlet connections of the valve body, particularly when peripheral annular or partially annular chambers are provided for, such as 16, 16A, 19, to which water can arrive from any direction whatever. In view of this fact, the sectional views shown are not necessarily to be interpreted as diametrical sections, and they can represent sections taken along dihedral planes through other possible embodiments.

## Claims

1. A single handle mixing valve comprising a body (1), with two inlets (2,3) for hot and cold water and an outlet (4) for discharging mixed water, a cap (6) intended to be fixed to the body (1) and forming with the body a chamber (7) for receiving a cartridge (8), said cartridge (8) comprising an envelope having a bottom traversed by entrances (9,10), said cartridge (8) including mechanisms for controlling and regulating the water flow as well as the mixing ratio between hot and cold water formed by a fixed plate (25) and a plate (26) movable by means of a single handle control lever (11),

characterized in that

the valve includes a reversing member (12) being a separate piece interposed in the body (1) between the two body inlets (2,3) and the entrances (9,10) of the cartridge (8), said reversing member (12) having two passages (14,15) and being positioned adjacent the cartridge bottom with said passages (14,15) registering with said entrances (9,10), said reversing member (12) further being so shaped that it can be selectively inserted in two different modes, and having two passages (14,15) so shaped and disposed that, in a first mode of insertion of the reversing member (12), the first passage thereof (14) establishes fluid communication between the first body inlet (2) and the fist entrance (9) of the cartridge and the second passage (15) establishes fluid communication between the second body inlet (3) and the second entrance (10) of the cartridge, whereas, in a second mode of insertion of the reversing member (12), the first passage thereof (14) establishes fluid communication between the first body inlet (2) and the second entrance (10) of the cartridge and the second passage (15) establishes fluid communication between the second body inlet (3) and the first entrance (9) of the cartridge, whereby the suitable selection of the insertion mode of said reversing member (12) allows choosing at the time of installing the valve, as well as modifying successively if required, the order of communication between the body inlets (2,3) and the cartridge entrances (9,10), and that said reversing member (12) has at least a portion of its surface which is exposed to the pressure of at least one body inlet, whereby it also operates as a piston compressing the cartridge (8).

2. A mixing valve according to Claim 1, characterized in that the reversing member (12) includes two separate pieces, the first piece being installed to achieve the first insertion mode and the second piece being installed to achieve the second insertion mode, the remaining piece of the reversing member being excluded (Figure 6).

3. A mixing valve according to Claim 1, characterized in that said two different positions of said reversing member (12) are achieved by rotating the reversing member about the central axis of the valve.

4. A mixing valve according to Claim 1, characterized in that said two different positions of said reversing member (12) are achieved by turning upside down the reversing member (Figure 6).

5. A mixing valve according to Claim 1, characterized in that the reversing member (12) is additionally biased by an elastic member (17).

6. A mixing valve according to Claim 1, characterized in that said reversing member (12) has a passage therethrough (14) in direct communication with the first inlet (2) of the body, and a second passage (15) in communication with a peripheral chamber (16, 19) which in turn is in communication with the second inlet (3) of the body.

7. A mixing valve according to Claim 1, characterized in that said reversing member (12) has both passages therethrough (14, 15) in communication with separate peripheral chambers (16, 16A) which in turn are in communication with either one of the inlets (2, 3) of the body.

8. A mixing valve according to Claim 6 or 7, characterized in that at least one of said peripheral chambers (16, 16A, 19) is formed in the reversing member (12).

9. A mixing valve according to Claim 6 or 7, characterized in that at least one of said peripheral chambers (16, 16A) is formed in the valve body (1).

**Patentansprüche**

1. Mischarmatur mit Einzelbetätigung mit einem Körper (1) mit zwei Einlaufanschlüssen (2,3) für Kalt- und Warmwasser und einem Auslaufanschluss (4) für das gemischte Wasser, mit einem am Körper (1) anbringbaren Deckel (6), der zusammen mit dem Körper eine Kammer (7) zur Aufnahme eines Einsatzes (8) bildet, wobei dieser Einsatz (8) einen Mantel besitzt, dessen Boden von Einläufen (9,10) durchsetzt ist, wobei der Einsatz (8) Einrichtungen zur Kontrolle und zur Regelung der Wassermenge sowie des Mischverhältnisses zwischen kaltem und warmem Wasser enthält, die aus einer festen Platte (25) und einer mittels eines einzigen Betätigungshebels (11) beweglichen Platte (26) besteht, dadurch gekennzeichnet, dass der Hahn ein als gesondertes Stück gestaltetes Wechselglied (12) umfasst, das im Körper (1) zwischen den Einlaufanschlüssen (2,3) des Körpers und den Einläufen (9,10) des Einsatzes (8) angeordnet ist und zwei Leitungen (14,15) aufweist, die mit den Einläufen (9,10) übereinstimmen, überdies das Wechselglied (12) so ausgebildet ist, dass es wahlweise in zwei verschiedenen Stellungen eingeschaltet werden kann, und die zwei Leitungen (14,15) so ausgebildet und angeordnet sind, dass in der ersten Einschaltstellung des Wechselgliedes (12) die erste Leitung (14) zwischen dem ersten Einlaufanschluss (2) des Körpers und dem ersten Einlauf (9) des Einsatzes eine Verbindung für die Flüssigkeit herstellt und die zweite Leitung (15) zwischen dem zweiten Einlaufanschluss (3) des Körpers und dem zweiten Einlauf (10) des Einsatzes eine Verbindung für die Flüssigkeit herstellt, während in der zweiten Einschaltstellung des Wechselgliedes (12) die erste Leitung (14) zwischen dem ersten Einlaufanschluss (2) des Körpers und dem zweiten Einlauf (10) des Einsatzes eine Verbindung für die Flüssigkeit herstellt und die zweite Leitung (15) zwischen dem zweiten Einlaufanschluss (3) des Körpers und dem ersten Einlauf (9) des Einsatzes eine Verbindung für die Flüssigkeit herstellt, sodass es die geeignete Wahl der Einschaltstellung des Wechselgliedes gestattet, die Verbindungsfolge zwischen den Einlaufanschlüssen (2,3) des Körpers und den Einläufen (9,10) des Einsatzes bei der Installation des Hahnes zu wählen oder auch, wenn erförderlich, später abzuändern; und dass das Wechselglied (12) wenigstens einen Teil der Oberfläche hat, der dem Druck von wenigstens einem der Einlaufanschlüsse des Körpers ausgesetzt ist und damit wie ein Kolben wirkt, der den Einsatz (8) drückt.

2. Mischarmatur nach Anspruch 1, dadurch gekennzeichnet, dass das Wechselglied (12) aus zwei gesonderten Stücken besteht, wobei das erste Stück für die erste Einschaltstellung und das zweite Stück für die zweite Einschalstellung vorgesehen ist und das sich jeweils nicht in Einschaltstellung befindende Stück des Wechselgliedes ausgeschlossen bleibt (Figur 6).

3. Mischarmatur nach Anspruch 1, dadurch gekennzeichnet, dass die beiden unterschiedlichen Lagen des Wechselgliedes (12) dadurch erzielt werden, dass das Wechselglied um die Mittelachse des Hahnes gedreht wird.

4. Mischarmatur nach Anspruch 1, dadurch gekennzeichnet, dass die beiden unterschiedlichen Lagen des Wechselgliedes (12) dadurch erzielt werden, dass das Wechselglied umgekippt wird (Figur 6).

5. Mischarmatur nach Anspruch 1, dadurch gekennzeichnet, dass überdies das Wechselglied (12) durch ein elastisches Element (17) beaufschlagt wird.

6. Mischarmatur nach Anspruch 1, dadurch gekennzeichnet, dass eine das Wechselglied (12) durchsetzende Durchströmungsstelle (14) mit dem ersten Einlaufanschluss (2) des Hahnkörpers in Verbindung steht und dass eine zweite Leitung (15) des Wechselgliedes mit einer Umfangskammer (16, 19) in Verbindung steht, die ihrerseits mit dem zweiten Einlaufanschluss (3) des Hahnkörpers in Verbindung steht.

7. Mischarmatur nach Anspruch 1, dadurch gekennzeichnet, dass zwei das Wechselglied (12) durchsetzenden Durchströmungsstellen (14,15) mit gesonderten Umfangskammern (16,16A) in Verbindung stehen, die ihrerseits je mit einem der beiden Einlaufanschlüsse (2,3) des Hahnkörpers in Verbindung stehen.

8. Mischarmatur nach Anspruch 6 oder 7, dadurch gekennzeichnet, dass wenigstens eine der genannten Umfangskammern (16,16A,19) innerhalb des Wechselgliedes (12) ausgebildet ist.

9. Mischarmatur nach Anspruch 6 oder 7, dadurch gekennzeicnet, dass wenigstens eine der genannten Umfangskammern (16,16A) innerhalb des Hahnkörpers (1) ausgebildet ist.

## Revendications

1. Robinet mélangeur à monocommande comprenant un corps (1) avec deux raccords d'entrée (2,3) pour de l'eau chaude et froide et avec un raccord (4) de débit pour l'eau mélangée, un couvercle (6) applicable au corps (1) qui détermine avec le corps une chambre (7) pour recevoir une cartouche (8), ladite cartouche (8) renfermant des mécanismes pour contrôler et régler le débit d'eau ainsi que le rapport de mélange entre eau chaude et froide, formés par une plaque fixe (25) et par une plaque (26) qui peut être déplacée moyennant un levier de monocommande (11), caractérisé en ce que le robinet comprend un organe inverseur (12) constituant une pièce séparée placée dans le corps (1) entre les raccords d'entrée (2,3) du corps et les entrées (9,10) de la cartouche, ledit organe inverseur (12) ayant deux passages (14,15) et étant disposé adjacent au fond de la cartouche avec lesdits passages (14,15) correspondants auxdites entrées (9,10), ledit organe inverseur (12) étant en outre conformé de façon telle qu'il peut être installé en deux modes différents, et ayant deux passages (14,15) conformés et disposés de sorte que, dans un premier mode d'installation de l'organe inverseur (12), son premier passaye (14) établit une communication pour le liquide entre le premier raccord d'entrée (2) du corps et la première entrée (9) de la cartouche et le second passage (15) établit une communication pour le liquide entre le second raccord d'entrée (3) du corps et la seconde entrée (10) de la cartouche, alors que, dans le second mode d'installation de l'organe inverseur (12), son premier passage (14) établit une communication pour le liquide entre le premier raccord d'entrée (2) du corps et la seconde entrée (10) de la cartouche et le second passage (15) établit une communication pour le liquide entre le second raccord (3) du corps et la première entrée (9) de la cartouche, de sorte que le choix opportun du mode d'installation dudit organe inverseur (12) permet de choisir au moment de l'installation du robinet, ainsi que de modifier par la suite s'il le faut, l'ordre de branchement entre les raccords d' entrée (2,3) du corps et les entrées (9,10) de la cartouche, et que ledit organe inverseur (12) présente au moins une partie de sa surface exposée à la pression d'au moins un des raccords d'entrée du corps, de sorte qu'il agit aussi comme un piston comprimant la cartouche (8).

2. Robinet mélangeur selon la revendication 1, caractérisé en ce que l'organe inverseur (12) comprend deux pièces distinctes, la première pièce étant installée pour réaliser le premier mode d'installation et la seconde pièce étant installée pour réaliser le second mode d'installation, l'autre pièce de l'organe inverseur restant exclue (Figure 6).

3. Robinet mélangeur selon la revendication 1, caractérisé en ce que lesdites deux positions différentes de l'organe inverseur (12) s'obtiennent en tournant l'organe inverseur autour de l'axe central du robinet.

4. Robinet mélangeur selon la revendication 1, caractérisé en ce que lesdites deux positions différentes de l'organe inverseur (12) s'obtiennent en renversant l'organe inverseur (Figure 6).

5. Robinet mélangeur selon la revendication 1, caractérisé en ce que l'organe inverseur (12) est additionnellement sollicité par un organe élastique (17).

6. Robinet mélangeur selon la revendication 1, caractérisé en ce que ledit organe inverseur (12) présente un passage (14) qui le traverse et qui est en communication directe avec le premier raccord d'entrée (2) du corps, et il présente un second passage (15) qui communique avec une chambre périphérique (16,19) qui à son tour communique avec le second raccord d'entrée (3) du corps.

7. Robinet mélangeur selon la revendication 1, caractérisé en ce que ledit organe inverseur (12) présente deux passages (14,15) qui le traversent et qui communiquent tous les deux avec des chambres périphériques séparées (15,16A), chacune desquelles à son tour est en communication avec l'un des deux raccords d'entrée (2,3) du corps.

8. Robinet mélangeur selon la revendication 6 ou 7, caractérisé en ce qu'au moins l'une desdites chambres périphériques (16,16A,19) est formée dans l'organe inverseur (12).

9. Robinet mélangeur selon la revendication 6 ou 7, caractérisé en ce qu'au moins l'une desdites chambres périphériques (16,16A) est formée dans le corps (1) du robinet.

8

FIG. 1

FIG. 2

FIG. 3

FIG. 4